Europäisches Patentamt

European Patent Office

Office européen des brevets

(19)

(11) Publication number: **0 001 686**
B1

(12)            -        **EUROPEAN PATENT SPECIFICATION**

(45) Date of publication of patent specification: **04.11.81**

(21) Application number: **78300432.8**

(22) Date of filing: **29.09.78**

(51) Int. Cl.³: **B 25 J 11/00,**
**B 25 J 15/02,**
**B 65 G 57/22, B 66 C 1/28**

(54) An industrial manipulator for placing articles in close proximity to adjacent articles and a method of close packing articles therewith.

(30) Priority: **20.10.77 GB 4370977**
**23.12.77 GB 5374877**

(43) Date of publication of application:
**02.05.79 Bulletin 79/9**

(45) Publication of the grant of the European patent:
**04.11.81 Bulletin 81/44**

(84) Designated Contracting States:
**DE FR GB NL SE**

(56) References cited:
**DE - A - 2 649 123**
**FR - A - 1 371 685**
**FR - A - 1 447 434**
**FR - A - 2 098 264**
**FR - A - 2 186 331**
**FR - A - 2 238 661**
**US - A - 2 934 218**
**US - A - 3 227 290**
**US - A - 3 268 092**
**US - A - 3 884 363**
**US - A - 3 952 880**

(73) Proprietor: **IMPERIAL CHEMICAL INDUSTRIES LIMITED**
**Imperial Chemical House Millbank**
**London SW1P 3JF (GB)**

(72) Inventor: **Thomson, Robert Pettigrew**
**182 Breedon Street**
**Long Eaton Nottingham NG10 4SE (GB)**
Inventor: **Robertson, James Ritchie**
**447 Chester Road**
**Hartford Northwich Cheshire (GB)**

(74) Representative: **Price, Dennis et al,**
**Imperial Chemical Industries Limited Legal**
**Department: Patents Thames House North**
**Millbank**
**London SW1P 4QG (GB)**

# An industrial manipulator for placing articles in close proximity to adjacent articles and a method of close packing articles therewith

The invention relates to an industrial manipulator for holding and orientating articles such as, for example, sacks filled with particulate materials, while placing them in close proximity to adjacent articles.

In general terms, industrial manipulators comprise three functional elements, which herein will be described as an "operational element," a "support means" and an "orientation zone."

The operational element is the part of the manipulator which acts on its environment. This may be a general purpose hand or may be specifically adapted for a single purpose such as welding or drilling. In the present invention the operational element is adapted for gripping articles to be stacked. Known gripping operational elements, sometimes referred to simply as "grippers," include vacuum devices and pairs of jaws which close onto the articles from either side.

The support means has the function of positioning the operational element in space. Examples of support means include articulated robot arms, as shown for example in French specification 1 371 685, and German offenlegungsschift 2 649 123, and gantries, as shown for example in French specification 1 447 434.

The orientation zone interconnects the support means and operational element, although in practice there may be some physical overlap of the mechanical parts of adjacent functional elements. The function of the orientation zone is to provide such further degrees of freedom as may be required for orientating the operational element according to the needs of the particular industrial manipulator considered. The additional degrees of freedom are usually obtained by a provision for rotation about an axis interconnecting the support means and the gripper or by a tilting about an axis perpendicular to that rotational axis, the latter generally taking the form of a simple hinge joint although universal joints have previously been proposed for some applications. Some known devices have a plurality of rotational means and some have a plurality of tilting means.

Although these three functional elements have been considered separately, each may substantially affect the operation or requirements of either of the other two, and it is the overall combination which determines the capabilities of the assembled industrial manipulator, rather than any specific feature of any one element taken in isolation.

When stacking articles in an orderly fashion, for example during palletisation, it is generally desirable that they be packed close together. This minimises the overall volume of the stack, enables the pallets to be kept to a minimum area for a given load, and usually also gives a more stable stack. A gripper which is particularly useful for many articles is one comprising a pair of jaws which grip the article from either side, but in known industrial manipulators, these present problems where close packing is desired, because of the physical intrusion of the jaws between the adjacent articles during stacking. Where the jaws are curved to provide additional support from beneath, even greater inter-article space is required to permit the curved supporting end to be withdrawn. The compromise which is often used is to position the article above the location in which it is to be stacked and then to open the jaws so that the article falls into position. Close packing can be achieved in this manner, but only at the expense of risking damage to the article by the rough treatment.

According to one aspect of the present invention, an industrial manipulator for placing articles onto a surface in close proximity to an adjacent article, comprises a gripper (18) for gripping the article, support means (1) for positioning the gripper in space with three positional degrees of freedom, and an orientation zone comprising means (12) for tilting the gripper about a first axis (AA') and means (11) for rotating the gripper about a second axis (BB') perpendicular to the first axis, the orientation zone being connected to the support means by a joint which enables the axis of rotation (BB') to be orthogonal to said surface when placing the article thereon, characterised in that the gripper comprises a pair of independantly operable jaws (20, 21) which are curved inwards so that the extended ends of the jaws provide platforms (22, 23) for supporting a gripped article (19) from below, over at least part of the area of said article, and in that the tilting means lies between the gripper and the rotation means whereby the gripper may be tilted away from the adjacent article to enable the elevated jaw to clear the adjacent article as it opens and thereby avoid it becoming trapped between the two articles.

Most applications require the articles to be placed onto horizontal surfaces, especially where the articles are to be stacked several layers deep, e.g. during palletisation. Hence for most applications the joint between the support means and the orientation zone must enable the axis of rotation to be vertical. During such multi-layer stacking operations as palletisation, reference to articles being placed "onto a surface" includes not only the placing of articles onto the pallet itself, but also onto layers of articles previously stacked on the pallet.

An article may be placed onto a horizontal surface, for example, in close proximity to an adjacent article which has been previously placed thereon, as follows. The jaws of the gripper are caused to grip either side of the article, then the gripper, together with its load, is transported by the support means until the article is suspended above its desired location. With the rotational axis of the orientation zone vertical, the gripper and its load are rotated into the required orientation in the horizontal plane. The article is then tilted away from the previously-placed article until its lower edge, i.e. the edge remote from the previously-placed article, lies close to the horizontal surface, and the raised jaw is sufficiently high for it to clear the adjacent article when it opens. On release, the article simply rocks about its lower edge and falls gently into place. The fall is then particularly gentle with non-rigid articles, such as sacks filled with particulate materials, which tend to fold in the middle as they are progressively released, such non-rigid articles often being the most vunerable to the rough handling of previously known methods. The lower jaw, not being adjacent to the previously-placed article, is not trapped, and so can be readily removed after release of the article.

This is a very simple but effective procedure, made possible by having the tilting means located between the rotating means and the gripper. Were the order of these functions reversed and no more orientation functions included, the manipulator could not take the article through the above sequence of movements, and orientation of the pallet would be required to achieve the same result. The orientation and tilting movements of the orientation means may be carried out simultaneously with the transportation by the support means when using a suitably programmed manipulator. When placing the first article onto the surface, or indeed when placing any subsequent article into a position such that neither of the jaws becomes trapped by an adjacent article, the tilt may not need to be operated.

The joint connecting the orientation zone to the support means need not necessarily be a movable joint. For example, in a gantry-type manipulator always used for stacking onto a horizontal surface, the axis of rotation can be made permanently vertical by using an immovable, e.g. welded, joint. It is however generally preferred to have a movable joint, e.g. a hinge, to enable the manipulator to close-stack articles on inclined surfaces where appropriate. Indeed, with some support means it will be found essential to make the joint to the orientation zone movable in order to enable the axis of rotation to be made perpendicular to the surface during orientation, even when only a single inclination of surface, e.g. horizontal is concerned. Such restrictive support means include swinging arms of only two rigid portions movably jointed to each other and to a rotatable base. However, a preferred manipulator is one in which the support means is a swinging arm comprising at least two rigid portions movably jointed together and to a rotatable base, the orientation zone being located at the end of the arm remote from the base.

The industrial manipulator of the present invention is particularly suited to the stacking, e.g. palletising of sacks filled with granular or powder material. Such sacks are non-rigid, but the platforms on the extended ends of the jaws provide support for the gripped sacks, from below. Such jaws are preferably also provided with means such as pressure pads for biasing the sack against the platforms, whereby the filled sack may be held firmly in the jaws, e.g. against inertial or gravitational forces, without suffering undue distortion from excessive sideways pressure exerted by the jaws on either side.

A particularly preferred industrial manipulator is one in which the tilt axis and the axis of rotation in the orientation zone pass through a common point, being a point which falls within the volume occupied by an article held normally by the gripper. The grippers are generally adapted for handling specific articles, e.g. filled sacks, and the position of such articles when held normally is, in practice, surprisingly consistent, and under such circumstances the approximate position of the mid-point of a gripped article may be predicted. Indeed it is advantageous for the common point to coincide with the mid-point of the article as this avoids translational movement of the article as it is rotated or tilted.

The present manipulators are designed to enable certain operations to be carried out, these being operations which we found would achieve a new result in overcoming difficulties experienced when close packing articles during palletisation and other similar activities. Thus according to a further aspect of the invention, there is now provided a method of placing an article onto a surface in close proximity to adjacent previously-placed article, comprising gripping the article between the jaws of an industrial manipulator according to the first aspect of the invention, transporting the article, orientating it in a plane parallel to the surface, and releasing it to fall onto the surface in close proximity to the previously-placed article, characterised in that the method further comprises tilting the gripped article away from the previously-placed article about an axis parallel to the surface before releasing it, the tilt being sufficient to bring the lowered side of the gripped article close to the surface, with the elevated jaw remaining sufficiently high to clear the previously-placed article as it opens.

The invention is illustrated by the following description of specific preferred embodiments thereof shown in the accompanying drawings, in which

Figure 1 shows a support means in the form of a swinging arm robot with an attached orientation zone ready to receive a gripper,

Figure 2 is a front elevation of a gripper with part of an orientation zone attached,

Figure 3 is a side elevation of the gripper shown in Figure 2,

Figure 4 is a front elevation of a second gripper, and

Figure 5 is a side elevation of the gripper shown in Figure 4.

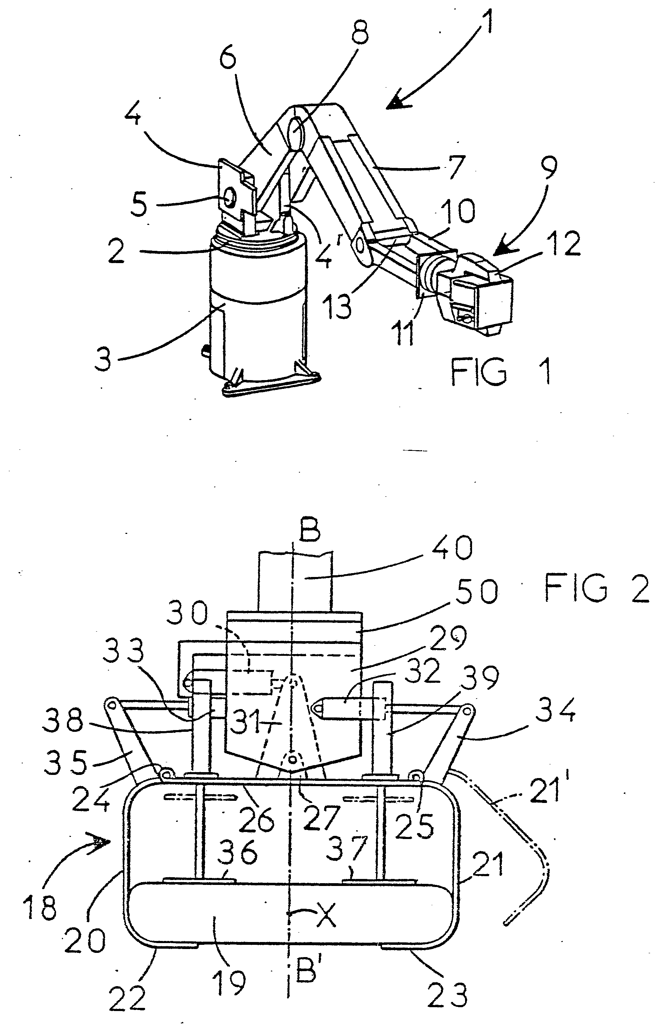

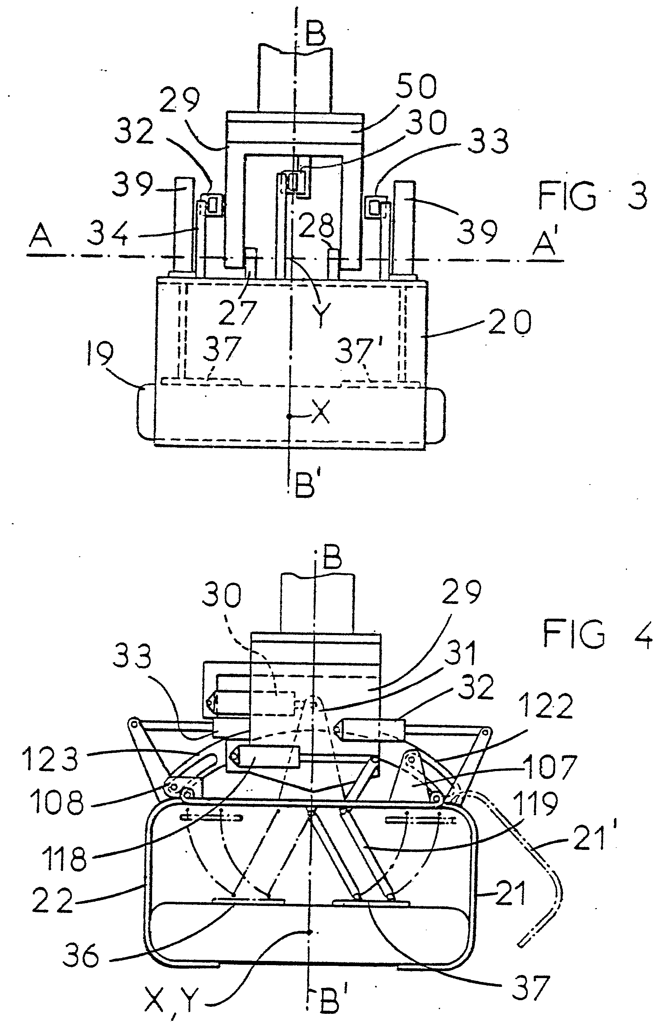

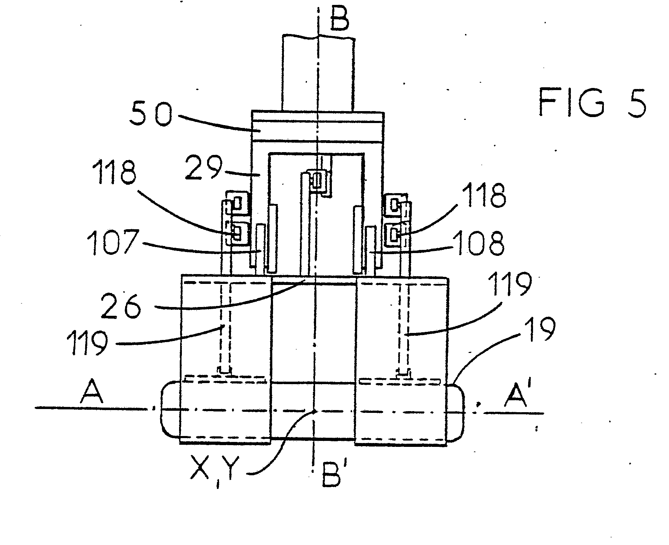

The support means 1 of Figure 1 is a swinging arm robot comprising a base 2 rotatably mounted on a fixed pedistal 3. Rising from the base are two parallel plates 4, 4' with an arm mounted between them on an axle 5. The arm comprises two rigid portions 6, 7, connected by a hinge 8. On the end of the arm is mounted an orientation zone 9 comprising a short rigid portion 10 carrying a rotatable plate 11 and a tilt mechanism 12. This orientation zone is mounted on the arm by a hinge joint 13. The manipulator is completed by a gripper, such as that shown in Figures 2 and 3 or that shown in Figures 4 and 5, mounted on the end of the tilt mechanism.

Movement at the two joints 5 and 8 enable the orientation zone to be positioned at varying heights and at varying distances from the base, all within a single plane, i.e. with two degrees of freedom. Rotation of the base provides a third degree of freedom, enabling the orientation zone to be positioned anywhere within a three-dimensional space. Most applications require the placing of articles onto a horizontal surface, so in use, with a gripper on the end of the arm, the orientation zone is normally held vertically at least during release of the sacks held by the gripper, rather than the horizontal position shown in Figure 1. This is achieved by movement of the joint 13 between the arm and the orientation zone. With the short rigid portion 10 vertical, the axis of the rotation of the rotatable plate 11 is also vertical, and a sack held in the gripper can be orientated within the horizontal plane as described in broad terms hereinabove. The tilt to be applied prior to release, is provided by the terminal tilting means 12. The orientation zone thus provides a further two degrees of freedom.

For stacking onto an inclined surface, the short rigid portion 10 can be set perpendicular to that surface by bending at the hinge 13. Rotation of the rotatable plate then serves to effect orientation of the sack within a plane parallel to the inclined surface, and the axis of tilt remains parallel to the inclined surface quite independantly of any such rotation.

Figures 2 and 3 are two views of the same gripper, and the same reference numbers have been used in both drawings. The gripper 18, shown holding a sack 19 filled with particulate material, comprises a pair of curved jaws 20, 21 whose extended ends 22, 23 provide additional support for the sack. The jaws are attached by hinges 24, 25 to opposite end of a chassis plate 26. Lugs 27, 28 attached to the chassis plate, are pivotly connected to the flanks of a supporting bracket 29, the pivotal axis being AA'. The pivotal movement of the chassis plate is controlled by a piston 30 bearing on a control strut 31 rigidly connected to the chassis plate. The opening of the jaws (for example to a position 21') is controlled by pistons 32, 33 which operate independently through cranks 34, 35. For convenience, one crank and one piston are located to the front of the gripper mechanism and the other pair to the rear as shown in the Figure 2. The chassis also carries pressure pads 36, 37, 37' which press the sack 19 against the curved supporting ends 22, 23 of the jaws, and hold it firmly. The pads are controlled by columns 38, 39, 39' using springs or pistons. The supporting bracket 29 is mounted on the end of a rotatable shaft 40, whose axis of rotation is shown as BB'.

In operation, the gripper carrying the sack is positioned by a support means (e.g. the swinging arm robot of Figure 1) to which it is attached via the rotation means 40 (this latter being equivalent to the rotatable plate 11 of Figure 1). The sack 19 is orientated in the horizontal plane by rotation about the axis BB'. As it nears its desired location, the chassis plate is tilted about the axis AA' by the piston 30. The sack is then released, by raising the uppermost jaw to its open position, and allowed to rock about its lower edge gently onto an underlying surface. The other jaw is then opened, allowing the gripper to be withdrawn along the line BB'. The tilt is then removed prior to picking up another sack.

The centre of gravity X of the sack lies on the axis of rotation BB'. Hence during orientation of the sack, rotation about the axis BB' causes no lateral movement of the sack. However, the tilt of the chassis plate is operated about the pivots of lugs 27, 28 i.e. about the axis AA'. The two axes pass through a common point Y which is displaced from the centre of gravity X. Hence there will be lateral displacement of the sack during tilting, which generally requires movement of the support means to compensate.

In the embodiment shown in Figures 4 and 5, this disadvantage is overcome by making the common point Y coincident with the point X, and tilting movement of the sack about the point X is thereby made possible without correction by simultaneous movement of the swinging arm. Many components are common to both embodiments, and like reference numerals have been used for like parts.

In the embodiment of Figures 4 and 5, the chassis plate 26 is suspended by means of brackets 107, 108 which slide in arcuate webs 122, 123 supported on the flanks of bracket 29. The arcuate webs are centred on the point X and tilting of the gripper about this point is controlled by the operation of piston 30 bearing on the control strut 31. In this embodiment, pressure pads 36, 37 are controlled by piston 118 via cranks 119 in order to hold the sack 19 in place in the jaws.

In both embodiments, i.e. that shown in Figures 2 and 3, and that shown in Figures 4 and 5, a load sensor 50 is shown located between the rotation means and bracket 29.

This may be used to sense the load carried by the gripper or a reaction force on the outside of the jaws. This sensor is an optional feature and does not affect the orientation, positioning or operation of the gripper.

Claims

1. An industrial manipulator for placing an article onto a surface in close proximity to an adjacent article comprising a gripper (18) for gripping the article, support means (1) for positioning the gripper in space with three positional degrees of freedom, and an orientation zone comprising means (12) for tilting the gripper about a first axis (AA') and means (11) for rotating the gripper about a second axis (BB') perpendicular to the first axis, the orientation zone being connected to the support means by a joint which enables the axis of rotation (BB') to be orthogonal to said surface when placing the article thereon, characterised in that the gripper comprises a pair of independantly operable jaws (20, 21) which are curved inwards so that the extended ends of the jaws provide platforms (22, 23) for supporting a gripped article (19) from below, over at least part of the area of said article, and in that the tilting means lies between the gripper and the rotation means whereby the gripper may be tilted away from the adjacent article to enable the elevated jaw to clear the adjacent article as it opens and thereby avoid it becoming trapped between the two articles.

2. An industrial manipulator according to claim 1 characterised in that the gripper is provided with means (36, 27) for biasing said article against the platforms (22, 23).

3. An industrial manipulator according to claim 1 or claim 2, characterised in that the tilt axis (AA') and the axis of rotation (BB') in the orientation zone (9) pass through a common point (Y), being a point which falls within the volume occupied by an article (19) held normally by the gripper.

4. An industrial manipulator according to claim 3, characterised in that the common point (Y) coincides with the mid-point (X) of the article.

5. An industrial manipulator according to any one of the preceding claims, characterised in that it incorporates a load sensor adapted to sense the load carried by the gripper or a reaction force on the outside of the jaws.

6. A method of placing an article onto a surface in close proximity to an adjacent previously-placed article, comprising gripping the article between the jaws of an industrial manipulator as claimed in any one of the preceding claims, transporting the article, orientating it in a plane parallel to the surface, and releasing it to fall onto the surface in close proximity to the previously-placed article, characterised in that the method further comprises tilting the gripped article away from the previously-placed article about an axis parallel to the surface before releasing it, the tilt being sufficient to bring the lowered side of the gripped article close to the surface, with the elevated jaw remaining sufficiently high to clear the previously-placed article as it opens.

Revendications

1. Manipulateur industriel pour placer un article sur une surface à proximité immédiate d'un article adjacent, comprenant une pince (18) pour saisir l'article, un moyen (1) de support pour positionner la pince dans l'espace avec trois degrés de liberté de position, et une zone d'orientation comprenant un moyen (12) pour incliner la pince autour d'un premier axe (AA') et un moyen (11) pour faire tourner la pince autour d'un second axe (BB') perpendiculaire au premier axe, la zone d'orientation étant reliée au moyen de support par un joint qui permet à l'axe de rotation (BB') d'être orthogonal à ladite surface lorsque l'article est placé sur elle, caractérisé en ce que la pince comprend deux mâchoires (20, 21) pouvant être commandées indépendamment, qui sont courbées vers l'intérieur afin que les extrémités prolongées des mâchoires constituent des plateaux (22, 23) pour supporter un article saisi (19) par le dessous, sur au moins une partie de l'aire dudit article, et en ce que le moyen d'inclinaison est situé entre la pince et le moyen de rotation de manière que la pince puisse être inclinée et éloignée de l'article adjacent pour permettre à la mâchoire élevée de se dégager de l'article adjacent lorsqu'elle s'ouvre et d'éviter ainsi d'être coincée entre les deux articles.

2. Manipulateur industriel selon la revendication 1, caractérisé en ce que la pince est équipée de moyens (36, 27) tendant à appliquer ledit article contre les plateaux (22, 23).

3. Manipulateur industriel selon la revendication 1 ou la revendication 2, caractérisé en ce que l'axe d'inclinaison (AA') et l'axe de rotation (BB') dans la zone d'orientation (9) passent par un point commun (Y), ce point étant situé dans le volume occupé par un article (19) maintenu normalement par la pince.

4. Manipulateur industriel selon la revendication 3, caractérisé en ce que le point commun (Y) coincide avec le point central (X) de l'article.

5. Manipulateur industriel selon l'une quelconque des revendications précédentes, caractérisé en ce qu'il comprend un détecteur de charge destiné à détecter la charge portée par la pince ou une force de réaction exercée sur le côté extérieur des mâchoires.

6. Procédé pour placer un article sur une surface à proximité immédiate d'un article adjacent placé précédemment, consistant à saisir l'article entre les mâchoires d'un manipulateur industriel selon l'une quelconque des revendications précédentes, à transporter l'article, à l'orienter dans un plan parallèle à la surface, et à le relâcher pour qu'il tombe sur la surface à proximité immédiate de l'article placé précédemment, caractérisé en ce que le procédé consiste en outre à incliner l'article saisi afin de l'éloigner de l'article placé précédemment autour d'un axe parallèle à la surface avant de le relâcher, l'inclinaison étant suffisante pour amener à proximité de la surface le côte inférieur de l'article saisi, la mâchoire élevée restant suffisamment haute pour se dégager de l'article placé précédemment lorsqu'elle s'ouvre.

## Patentansprüche

1. Industrie-Manipulator zum Ablegen eines Gegenstands auf eine Ablagefläche in unmittelbarer Nähe eines angrenzenden Gegenstands, mit einer Greifeinrichtung (18) zum Erfassen des Gegenstands, einer Halteeinrichtung (1) zum Positionieren der Greifeinrichtung im Raum mit 3 Positionierungs-Freiheitsgraden und einem Ausrichtungsbereich mit einer Einrichtung (12) zum Verschwenken der Greifeinrichtung um eine erste Achse (AA') und einer Einrichtung (11) zum Verdrehen der Greifeinrichtung um eine zur ersten Achse senkrechte Achse (BB'), wobei der Ausrichtungsbereich mit der Halteeinrichtung mittels eines Gelenks verbunden ist, welches es ermöglicht, daß die Drehachse (BB') senkrecht zur Ablagefläche ausgerichtet ist, wenn der Gegenstand auf sie abgelegt wird, dadurch gekennzeichnet, daß die Greifeinrichtung ein Paar von unabhängig betätigbaren Greiferklauen (20, 21) besitzt, die nach innen gebogen sind, so daß die äußeren Enden der Greiferklauen Plattformen (22, 23) zur Unterstützung des erfaßten Gegenstands von unten über zumindest einen Teil der Oberfläche des Gegenstands ausbilden, und daß die Schwenkeinrichtung zwischen der Greifeinrichtung und der Dreheinrichtung liegt, wodurch die Greifeinrichtung vom angrenzenden Gegenstand weg verschwenkt werden kann, um es der hochgehobenen Greiferklaue zu ermöglichen, beim Öffnen am angrenzenden, Gegenstand vorbeizukommen und um dadurch zu verhindern, daß die Greiferklaue swischen den beiden Gegenständen eingefangen wird.

2. Industrie-Manipulator nach Anspruch 1, dadurch gekennzeichnet, daß die Greifeinrichtung mit einer Einrichtung (36, 27) zum Andrücken des Gegenstands gegen die Plattformen (22, 23) versehen ist.

3. Industrie-Manipulator nach Anspruch 1 oder 2, dadurch gekennzeichnet, daß die Schwenkachse (AA') und die Drehachse (BB') im Ausrichtungsbereich (9) durch einen gemeinsamen Punkt (Y) verlaufen, der einen Punkt darstellt, welcher in den Raum fällt, der durch einen von der Greifeinrichtung normal gehaltenen Gegenstand eingenommen wird.

4. Industrie-Manipulator nach Anspruch 3, dadurch gekeinnzeichnet, daß der geminsame Punkt (Y) mit dem Mittelpunkt (X) des Gegenstands zusammenfällt.

5. Industrie-Manipulator nach einem der vorhergehenden Ansprüche, dadurch gekennzeichnet, daß in den Industrie-Manipulator ein Lastmeßfühler eingegliedert ist, der sich zur Erfassung der durch die Greifeinrichtung getragenen Last oder einer Reaktionskraft auf die Außenseite der Greiferklauen eignet.

6. Verfahren zum Ablegen eines Gegenstands auf eine Ablagefläche in unmittelbarer Nähe eines angrenzenden vorher abgelegten Gegenstands, wobei der Gegenstand zwischen den Greiferklauen eines Industrie-Manipulators nach einem der vorhergehenden Ansprüche ergriffen, transportiert, in einer zur Ablagfläche parallelen Ebene ausgerichtet und losgelassen wird, so daß er in unmittelbarer Nähe des vorher abgelegten Gegenstands auf die Ablagefläche fällt, dadurch gekennzeichnet, daß das Verfahren ferner ein Verschwenken des Gegenstands vom vorher abgelegten Gegenstand weg um eine zur Ablagefläche parallele Achse vorsieht, bevor der Gegenstand losgelassen wird, wobei die Verschwenkbewegung ausreichend groß ist, um die abgesenkte Seite des ergriffenen Gegenstands nahe an die Ablagefläche zu bringen und wobei die angehobene Greiferklaue ausreichend hoch gehalten wird, um beim Öffen am vorher abgelegten Gegenstand vorbeizukommen.

0 001 686

FIG 1

FIG 2

1

FIG 3

FIG 4

FIG 5